# EUROPEAN PATENT APPLICATION

(11) **EP 4 645 419 A1**
(43) Date of publication of application: **05.11.2025**
(21) Application number: 23931503.9
(22) Date of filing: 07.04.2023
(51) Int. Cl.: H01M 4/13

(54) **ELECTRODE SHEET, BATTERY, AND ELECTRICAL DEVICE**

(71) Applicant: Contemporary Amperex Technology Co., Limited, Jiaocheng District Ningde Fujian 352100 (CN)
(72) Inventor: YIN, Ziyi, Ningde, Fujian 352100 (CN); CHEN, Xingbu, Ningde, Fujian 352100 (CN); LING, Yangfang, Ningde, Fujian 352100 (CN); SUN, Xin, Ningde, Fujian 352100 (CN); JIN, Haizu, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2023/086948
(87) International publication number: WO 2024/207442

(57) **Abstract**

The present application provides an electrode sheet, a battery, and an electrical device. The electrode sheet comprises a current collector, an undercoat layer, and an active layer, and the undercoat layer is located between the current collector and the active layer, the undercoat layer comprises a conductive agent, the active layer comprises an active material and a first electrolyte absorption material, and the electrolyte absorption rate of the first electrolyte absorption material is greater than or equal to 110%.

## Description

### TECHNICAL FIELD

The present application relates to the field of batteries, and in particular, to an electrode plate, a battery, and an electric device.

### BACKGROUND

The statements herein only provide background information related to the present application and do not necessarily constitute the prior art.

The electrode plate is one of the important components of the battery and has a significant impact on the performance of the battery. With continuous improvements in battery performance, the limitations of traditional electrode plates on further battery performance improvements are becoming increasingly apparent. For example, traditional electrode plates find it challenging to achieve high ionic conductivity and high electronic conductivity simultaneously, such that the direct-current internal resistance of the battery is high, thereby restricting further improvement of battery performance.

### SUMMARY

In order to solve the above problems, the present application provides an electrode plate. The electrode plate includes a current collector, a bottom coating, and an active layer, where the bottom coating is positioned between the current collector and the active layer; and the bottom coating includes a conductive agent, and the active layer includes active materials and a first liquid absorption material, where the liquid absorption rate of the first liquid absorption material is ≥ 110%.

In the above electrode plate, the first liquid absorption material is introduced into the active layer by stacking the bottom coating with the active layer and introducing the conductive agent into the bottom coating. As such, the infiltration of an electrolytic solution inside the electrode plate can be facilitated, the amount of the electrolytic solution entering the electrode plate is increased, and the ionic conductivity of the electrode plate is improved. At the same time, in the above electrode plate, the arrangement of the bottom coating may improve the electronic conductivity of the electrode plate, thereby enabling the electrode plate to achieve high electronic conductivity and high ionic conductivity simultaneously, reduce the direct-current internal resistance of the battery, and improve the rate capability of the battery.

In some embodiments, the liquid absorption rate of the first liquid absorption material is ≥ 120%.

In some embodiments, the resistivity of the conductive agent is ≤ 60 mΩ/cm.

In some embodiments, the mass percentage of the conductive agent in the bottom coating is 15%-45%.

In some embodiments, the conductive agent includes at least one of superconducting carbon, acetylene black, carbon black, Ketjen black, a carbon dot, a carbon nanotube, graphene, and a carbon nanofiber.

In some embodiments, the bottom coating further includes a second liquid absorption material, where the liquid absorption rate of the second liquid absorption material is ≥ the liquid absorption rate of the first liquid absorption material.

In some embodiments, the liquid absorption rate of the second liquid absorption material is ≥ 110%.

In some embodiments, the liquid absorption rate of the second liquid absorption material is ≥ 120%.

In some embodiments, the dispersion density of the second liquid absorption material in the bottom coating is greater than the dispersion density of the first liquid absorption material in the active layer.

In some embodiments, the dispersion density of the second liquid absorption material in the bottom coating is 0.3 g/cm³-1 g/cm³.

In some embodiments, the mass percentage of the second liquid absorption material in the bottom coating is 10%-30%.

In some embodiments, the second liquid absorption material includes at least one of a polyacrylic acid-based electrolyte, a polyacrylonitrile-based electrolyte, a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte.

In some embodiments, the second liquid absorption material includes one or more of poly(ethyl methacrylate), poly(ethyl acrylate), poly(*n*-butyl methacrylate), poly(butyl acrylate), poly(*n*-octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

In some embodiments, the dispersion density of the first liquid absorption material in the active layer is 0.1 g/cm³-0.5 g/cm³.

In some embodiments, the mass percentage of the first liquid absorption material in the active layer is 0.5%-30%.

In some embodiments, the mass percentage of the first liquid absorption material in the active layer is 0.5%-10%.

In some embodiments, the first liquid absorption material includes at least one of a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte.

In some embodiments, the first liquid absorption material includes one or more of a polyacrylic acid-based electrolyte, a polyacrylonitrile-based electrolyte, poly(ethyl methacrylate), poly(ethyl acrylate), poly(*n*-butyl methacrylate), poly(butyl acrylate), poly(*n-*octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

In some embodiments, in the active layer, in the direction away from the bottom coating, the dispersion density of the first liquid absorption material gradually decreases.

In some embodiments, with 1/2 of the active layer's thickness as the boundary, the dispersion density of the first liquid absorption material on a side proximal to the bottom coating is higher than the dispersion density of the first liquid absorption material on a side distal to the bottom coating.

In some embodiments, the active layer includes a plurality of stacked active sublayers, where each active sublayer includes the active materials and the first liquid absorption material, the first liquid absorption material in each active sublayer is uniformly distributed, and in the direction away from the bottom coating, the mass percentage of the first liquid absorption material in adjacent active sublayers gradually decreases.

In some embodiments, in the direction away from the bottom coating, the mass percentage of the first liquid absorption material in adjacent active sublayers decreases by 0.5%-3%.

In some embodiments, the active sublayer includes at least 2 layers, and in the direction away from the bottom coating, mass percentages of the first liquid absorption material in the 2 active sublayers are 1%-5% and ≤ 4.5%, respectively.

In some embodiments, the active sublayer includes at least 3 layers, and in the direction away from the bottom coating, mass percentages of the first liquid absorption material in the 3 active sublayers are 1%-5%, 0.5%-4.5%, and ≤ 4%, respectively.

The present application further provides a battery. The battery includes the electrode plate.

In some embodiments, the electrolyte of the battery partially infiltrates into the active layer and/or the bottom coating of the electrode plate.

In some embodiments, the electrolyte includes a free electrolytic solution and/or a gel electrolyte.

The present application further provides an electric device. The electric device includes the battery.

### BRIEF DESCRIPTION OF THE DRAWINGS

In order to more clearly illustrate the technical solutions of the present application, the drawings used in the present application
are briefly described below. Apparently, the drawings in the following description illustrate merely some embodiments of the present application, and those of ordinary skills in the art may still derive other drawings from these drawings without creative efforts.
FIG. 1 is a schematic view of a secondary battery according to one embodiment of the present application.
FIG. 2 is an exploded view of the secondary battery according to one embodiment of the present application shown in FIG. 1.
FIG. 3 is a schematic view of an electric device using a secondary battery as a power source according to one embodiment of the present application.

Description of the reference numerals:
1. secondary battery; 11. housing; 12. electrode assembly; 13. top cover assembly; and 2. electric device.

To better describe and illustrate the embodiments and/or examples of the present disclosure disclosed herein, reference may be made to one or more of the drawings. The additional details or examples used to describe the drawings should not be considered as limiting the scope of any one of the present disclosure, the presently described embodiments and/or examples, and the best modes of the present disclosure presently understood.

### DETAILED DESCRIPTION

To facilitate the understanding of the present application, a more comprehensive description of the present application will be given below with reference to the related drawings. Preferred embodiments of the present application are shown in the drawings. The present application may, however, be implemented in many different forms and should not be construed as being limited to the embodiments described herein. Rather, these embodiments are provided to make the understanding of the content disclosed in the present application more thorough and comprehensive.

Unless defined otherwise, all technical and scientific terms used herein have the same meaning as commonly understood by those skilled in the art to which the present application belongs. The terms used in the specification of the present application are only for describing the specific embodiments, rather than limiting the present application. As used herein, the term "and/or" includes any and all combinations of one or more of the associated listed items.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true or present and B is false or absent; A is false or absent and B is true or present; or both A and B are true, or both A and B are present.

Unless otherwise specified, the terms used in the present application have the well-known meanings that are commonly understood by those skilled in the art. Unless otherwise specified, the numerical values of the parameters mentioned in the present application can be measured by various measurement methods commonly used in the art. For example, the values of the parameters can be tested according to the methods given in the embodiments of the present application.

One embodiment of the present application provides an electrode plate. The electrode plate includes a current collector, a bottom coating, and an active layer. The bottom coating is positioned between the current collector and the active layer. The bottom coating includes a conductive agent, and the active layer includes active materials and a first liquid absorption material. The liquid absorption rate of the first liquid absorption material is ≥ 110%.

In the electrode plate of this embodiment, the first liquid absorption material is introduced into the active layer by stacking the bottom coating with the active layer and introducing the conductive agent into the bottom coating. As such, the infiltration of an electrolytic solution inside the electrode plate can be facilitated, the amount of the electrolytic solution entering the electrode plate is increased, and the ionic conductivity of the electrode plate is improved. At the same time, during the charging and discharging of the battery, the active materials of the electrode plate may expand to a certain extent, such that the gap between the active materials is increased, resulting in the problem of reduction of electronic conductivity. In the above electrode plate, the arrangement of the bottom coating may improve the electronic conductivity of the electrode plate, thereby enabling the electrode plate to achieve high electronic conductivity and high ionic conductivity simultaneously, reduce the direct-current internal resistance of the battery, and improve the rate capability of the battery.

Optionally, the liquid absorption rate of the first liquid absorption material is ≥ 110%, ≥ 112%, ≥ 115%, ≥ 118%, ≥ 120%, ≥ 125%, ≥ 130%, ≥ 140%, ≥ 150%, ≥ 160%, or the like. Further optionally, the liquid absorption rate of the first liquid absorption material is ≥ 120%.

It can be understood that the liquid absorption rate may be obtained by the following gravimetric method: The dried liquid absorption material is first weighed to obtain the dry weight of the liquid absorption material and then soaked in the electrolytic solution at a normal temperature for 24 h. After removal from the electrolytic solution, the liquid absorption material is blotted with a piece of filter paper to remove the surface electrolytic solution and then weighed to obtain the weight of the liquid absorption material after liquid absorption. The liquid absorption rate of the liquid absorption material is calculated according to the following formula: Q = Ws/Wd × 100%, where Q represents the liquid absorption rate of the liquid absorption material, Ws represents the weight of the liquid absorption material after liquid absorption, and Wd represents the dry weight of the liquid absorption material. Optionally, a conventional electrolytic solution may be used as the electrolytic solution. The lithium salt in the electrolytic solution is 1 M LiPF₆, the solvent is a mixed solvent of EC and EMC, and the volume ratio of EC to EMC is 1:1.

The introduction of the conductive agent into the bottom coating is conducive to improving the electronic conductivity of the electrode plate, and optionally, the resistivity of the conductive agent is ≤ 60 mΩ/cm. Optionally, the resistivity of the conductive agent is tested at a pressure of 8 MPa. It can be understood that the unit of the resistivity of the conductive agent is: mQ/cm @8 MPa, which represents the resistivity at a pressure of 8 MPa. The resistivity of the conductive agent within the range can further improve the electronic conductivity of the electrode plate, such that the electrode plate can be better matched with a battery with high energy density. Optionally, the resistivity of the conductive agent is ≤ 55 mΩ/cm, ≤ 50 mQ/cm, ≤ 45 mQ/cm, ≤ 40 mΩ/cm, ≤ 35 mQ/cm, ≤ 30 mΩ/cm, ≤ 25 mΩ/cm, ≤ 20 mΩ/cm, ≤ 15 mΩ/cm, ≤ 10 mQ/cm, ≤ 5 mQ/cm, or the like. It can be understood that the lower the resistivity of the conductive agent, the higher the corresponding electronic conductivity.

In some embodiments, the mass percentage of the conductive agent in the bottom coating is 15%-45%. When the mass percentage of the conductive agent in the bottom coating is too low, the improvement of the bottom coating on the conductive performance of the electrode plate may be limited, making it difficult to exert the effect of the conductive agent. When the mass percentage of the conductive agent in the bottom coating is too high, the overall proportion of the active substances in the electrode plate may be reduced, which is not conducive to maintaining and increasing the energy density of the electrode plate. Optionally, the conductive agent is uniformly distributed in the bottom coating. Optionally, the mass percentage of the conductive agent in the bottom coating is 15%, 20%, 25%, 30%, 35%, 40%, 45%, or the like.

As some optional examples of the conductive agent, the conductive agent includes at least one of superconducting carbon, acetylene black, carbon black (SP), Ketjen black, a carbon dot, a carbon nanotube (CNT), a graphene, and a carbon nanofiber. These conductive agents are widely sourced and conducive to promoting the production and use of the electrode plate. It can be understood that the carbon nanotube includes at least one of a single-walled carbon nanotube (SWCNT) and a multi-walled carbon nanotube (MWCNT).

In some embodiments, the bottom coating further includes a second liquid absorption material. The liquid absorption rate of the second liquid absorption material is ≥ the liquid absorption rate of the first liquid absorption material. In this case, when the electrode plate is applied in the battery, the bottom coating may absorb a portion of the electrolytic solution, such that the transport of ions in the electrode plate is promoted, thereby further improving the ionic conductivity of the electrode plate. In addition, when the materials of the active layer expand during the charging and discharging of the battery, the electrolytic solution in the active layer is extruded to a certain extent, which is indicated by a decrease in the content of the electrolytic solution in the active layer to some extent. In this case, when the bottom coating includes the second liquid absorption material, the second liquid absorption material may play a certain role in retaining the electrolytic solution in the battery, i.e., may retain a certain amount of electrolytic solution in the bottom coating. As such, when the materials of the active layer expand, the electrolytic solution in the bottom coating may be extruded to the active layer, such that the electrolytic solution in the active layer may be supplemented to a certain extent, thereby improving the cycling stability of the battery during charging and discharging.

In some embodiments, the liquid absorption rate of the second liquid absorption material is > the liquid absorption rate of the first liquid absorption material. In this case, more electrolytic solution can be brought more proximal to the current collector, which is conducive to further reducing the direct-current internal resistance of the battery.

Optionally, the liquid absorption rate of the second liquid absorption material is ≥ 110%. Further optionally, the liquid absorption rate of the second liquid absorption material is ≥ 120%. Optionally, the liquid absorption rate of the second liquid absorption material is ≥ 110%, ≥ 112%, ≥ 115%, ≥ 118%, ≥ 120%, ≥ 125%, ≥ 130%, ≥ 140%, ≥ 150%, ≥ 160%, or the like.

In some embodiments, the dispersion density of the second liquid absorption material in the bottom coating is greater than the dispersion density of the first liquid absorption material in the active layer. In this case, more electrolytic solution can be brought to enter the bottom coating, such that more electrolytic solution is retained in the bottom coating on the basis of improving the ionic conductivity of the electrode plate. Therefore, when the materials of the active layer expand during the charging and discharging of the battery, the electrolytic solution in the active layer is supplemented better, which enables the active layer to maintain a stable ionic conductivity, thereby further improving the cycling stability of the battery during charging and discharging. In addition, when the dispersion density of the second liquid absorption material in the bottom coating is greater than the dispersion density of the first liquid absorption material in the active layer, the proportion of the first liquid absorption material in the active layer may be reduced on the basis of promoting the electrolytic solution to enter the electrode plate so as to improve the ionic conductivity of the electrode plate, such that the proportion of the active substances in the active layer may be correspondingly increased, which is conducive to increasing the energy density of the electrode plate.

Optionally, the dispersion density of the second liquid absorption material in the bottom coating is 0.3 g/cm³-1 g/cm³. Optionally, the dispersion density of the second liquid absorption material is 0.3 g/cm³, 0.4 g/cm³, 0.5 g/cm³, 0.6 g/cm³, 0.7 g/cm³, 0.8 g/cm³, 0.9 g/cm³, or 1 g/cm³. Further optionally, the second liquid absorption material is uniformly distributed in the bottom coating.

In some embodiments, the mass percentage of the second liquid absorption material in the bottom coating is 10%-30%. When the mass percentage of the second liquid absorption material in the bottom coating is too low, the improvement effect of the bottom coating on the infiltration of the electrolytic solution in the electrode plate may be limited, making it difficult to exert the effect of the second liquid absorption material. When the mass percentage of the second liquid absorption material in the bottom coating is too high, the overall proportion of the active substances in the electrode plate may be reduced, which is not conducive to maintaining and increasing the energy density of the electrode plate. Optionally, the mass percentage of the second liquid absorption material in the bottom coating is 10%, 12%, 15%, 18%, 20%, 22%, 25%, 28%, 30%, or the like.

As some selection examples of the second liquid absorption material, the second liquid absorption material includes at least one of a polyacrylic acid-based electrolyte, a polyacrylonitrile-based electrolyte, a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte. Optionally, the second liquid absorption material includes one or more of poly(ethyl methacrylate), poly(ethyl acrylate), poly(*n*-butyl methacrylate), poly(butyl acrylate), poly(*n*-octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

It can be understood that the bottom coating may be formed by coating. It can also be understood that, during coating, the conductive agent and the second liquid absorption material may be added to the slurry to form a corresponding bottom coating.

In some embodiments, the dispersion density of the first liquid absorption material in the active layer is 0.1 g/cm³-0.5 g/cm³. Optionally, the dispersion density of the first liquid absorption material in the active layer is 0.1 g/cm³, 0.105 g/cm³, 0.15 g/cm³, 0.2 g/cm³, 0.25 g/cm³, 0.3 g/cm³, 0.35 g/cm³, 0.4 g/cm³, 0.45 g/cm³, 0.5 g/cm³, or the like. Further optionally, the first liquid absorption material is uniformly distributed in the active layer.

In some embodiments, the mass percentage of the first liquid absorption material in the active layer is 0.5%-30%. When the mass percentage of the first liquid absorption material in the active layer is too low, the improvement effect of the active layer on the infiltration of the electrolytic solution in the electrode plate may be limited, making it difficult to exert the effect of the first liquid absorption material. When the mass percentage of the first liquid absorption material in the active layer is too high, the overall proportion of the active substances in the electrode plate may be reduced, which is not conducive to maintaining and increasing the energy density of the electrode plate. Optionally, the mass percentage of the first liquid absorption material in the active layer is 0.5%-10%. Further optionally, the mass percentage of the first liquid absorption material in the active layer is 0.5%, 1%, 2%, 3%, 4%, 5%, 6%, 7%, 8%, 9%, 10%, 12%, 15%, 18%, 20%, 22%, 25%, 28%, 30%, or the like.

As some selection examples of the first liquid absorption material, the first liquid absorption material includes at least one of a polyacrylic acid-based electrolyte, a polyacrylonitrile-based electrolyte, a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte. Optionally, the first liquid absorption material includes one or more of poly(ethyl methacrylate), poly(ethyl acrylate), poly(*n*-butyl methacrylate), poly(butyl acrylate), poly(*n*-octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

It can be understood that the first liquid absorption material and the second liquid absorption material may be the same or different.

In some embodiments, in the active layer, in the direction away from the bottom coating, the dispersion density of the first liquid absorption material gradually decreases. In this case, the first liquid absorption material may form a certain concentration gradient in the active layer, which is conducive to facilitating the infiltration of the electrolytic solution in the active layer, thereby promoting the electrolytic solution to fully infiltrate the active layer.

In some embodiments, with 1/2 of the active layer's thickness as the boundary, the dispersion density of the first liquid absorption material on a side proximal to the bottom coating is higher than the dispersion density of the first liquid absorption material on a side distal to the bottom coating. Optionally, the first liquid absorption material is uniformly distributed in the active layer.

In some embodiments, the active layer includes a plurality of stacked active sublayers. Each active sublayer includes the active materials and the first liquid absorption material. The first liquid absorption material in each active sublayer is uniformly distributed. In the direction away from the bottom coating, the mass percentage of the first liquid absorption material in adjacent active sublayers gradually decreases. In this case, the first liquid absorption material may form a certain concentration gradient in the active layer, which is conducive to facilitating the infiltration of the electrolytic solution in the active layer, thereby promoting the electrolytic solution to fully infiltrate the active layer. It can be understood that when preparing the plurality of stacked active sublayers, each active sublayer may be formed in sequence by sequential coating. It can also be understood that a corresponding mass percentage of the first liquid absorption material may be added to the slurry of each active sublayer, thereby forming an active sublayer having a corresponding proportion of the first liquid absorption material.

Optionally, in the direction away from the bottom coating, the mass percentage of the first liquid absorption material in adjacent active sublayers decreases by 0.5%-3%. Optionally, in the direction away from the bottom coating, the mass percentage of the first liquid absorption material in adjacent active sublayers decreases by 0.5%, 0.8%, 1%, 1.2%, 1.5%, 1.8%, 2%, 2.2%, 2.5%, 2.8%, 3%, or the like.

Further optionally, the active sublayers are equal in thickness.

In some embodiments, the active sublayer includes at least 2 layers, and in the direction away from the bottom coating, the mass percentages of the first liquid absorption material in the 2 active sublayers are 1%-5% and ≤ 4.5%, respectively. Optionally, in the 2 active sublayers, the mass percentage of the first liquid absorption material in the active sublayer proximal to the bottom coating is 1%, 1.5%, 2%, 2.5%, 3%, 3.5%, 4%, 4.5%, 5%, or the like. The mass percentage of the first liquid absorption material in the active sublayer distal to the bottom coating is 0, 0.5%, 1%, 1.5%, 2%, 2.5%, 3%, 3.5%, 4%, 4.5%, or the like. Optionally, in the direction away from the bottom coating, the mass percentages of the first liquid absorption material in the 2 active sublayers are 1%-5% and 0-4.5%, respectively.

In some embodiments, the active sublayer includes at least 3 layers, and in the direction away from the bottom coating, the mass percentages of the first liquid absorption material in the 3 active sublayers are 1%-5%, 0.5%-4.5%, and ≤ 4%, respectively. Optionally, in the 3 active sublayers, the mass percentage of the first liquid absorption material in the active sublayer proximal to the bottom coating is 1%, 1.5%, 2%, 2.5%, 3%, 3.5%, 4%, 4.5%, 5%, or the like. The mass percentage of the first liquid absorption material in the middle active sublayer is 0, 0.5%, 1%, 1.5%, 2%, 2.5%, 3%, 3.5%, 4%, 4.5%, or the like. The mass percentage of the first liquid absorption material in the active sublayer most distal to the bottom coating is 0, 0.5%, 1%, 1.5%, 2%, 2.5%, 3%, 3.5%, 4%, or the like. Optionally, in the direction away from the bottom coating, the mass percentages of the first liquid absorption material in the 3 active sublayers are 1%-5%, 0.5%-4.5%, and 0-4%, respectively.

Yet another embodiment of the present application provides a battery. The battery includes the above electrode plate. Through the introduction of the above electrode plate into the battery, the direct-current internal resistance of the battery may be reduced, thereby improving the performance of the battery.

In some embodiments, the electrolyte of the battery partially infiltrates into the active layer and/or the bottom coating of the electrode plate. In this case, the electrolyte of the battery partially infiltrates into the active layer and/or the bottom coating of the electrode plate, which is conducive to forming more abundant ion transport channels, thereby further improving the performance of the battery.

Optionally, the electrolyte includes a free electrolytic solution and/or a gel electrolyte.

It can be understood that a gel electrolytic solution can be injected during liquid injection and then solidified to obtain the gel electrolyte.

Optionally, the gel electrolytic solution includes a polymerizable monomer, an initiator, an electrolyte salt, and a solvent. Further optionally, the polymerizable monomer includes at least one of an ester monomer, an ether monomer, a carbonate monomer, a sulfone monomer, an isocyanate, an amide monomer, a nitrile monomer, a fluorinated monomer, an oligomer with chain ether segments, and a siloxane monomer. Optionally, the initiator includes at least one of azobisisobutyronitrile, azobisisoheptonitrile, benzoyl, dicumyl peroxide, dibenzoyl peroxide, and ammonium persulfate.

In some embodiments, the positive electrode active material of the battery includes a high-nickel material. Optionally, the positive electrode active material includes a material with the chemical formula LiNi₁₋ₓMₓO₂, where 0 ≤ x ≤ 0.2, and M includes at least one of Co, Mn, Al, Fe, Cu, and V.

In some embodiments, the negative electrode active material of the battery includes a silicon-based material. Optionally, the silicon-based material may be selected from at least one of elemental silicon, a silicon-oxygen compound, a silicon-carbon composite, a silicon-nitrogen composite, and a silicon alloy. Optionally, the mass percentage of silicon in the silicon-based material is ≥ 20%.

Yet another embodiment of the present application provides an electric device. The electric device includes the above battery.

Hereinafter, the secondary battery and the electric device of the present application are described with appropriate reference to the drawings.

Typically, a secondary battery includes a positive electrode plate, a negative electrode plate, an electrolyte, and a separator. During the charging and discharging of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of ions.

### Positive Electrode Plate

A positive electrode plate includes a positive electrode current collector and a positive electrode film layer disposed on at least one surface of the positive electrode current collector, and the positive electrode film layer includes a positive electrode active material.

As an example, the positive electrode current collector is provided with two surfaces opposite to each other in a thickness direction thereof, and the positive electrode active material layer is disposed on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material on a polymer material substrate. Optionally, the metal material may include, but is not limited to, one or more of aluminum, an aluminum alloy, nickel, a nickel alloy, titanium, a titanium alloy, silver, and a silver alloy. Optionally, the polymer material substrate may include, but is not limited to, one or more of polypropylene (PP), polyethylene terephthalate (PET), polybutylene terephthalate (PBT), polystyrene (PS), and polyethylene (PE).

As an example, the positive electrode active material may include a positive electrode active material for use in batteries known in the art. As an example, the positive electrode active material may include at least one of the following materials: a lithium-containing phosphate with an olivine structure, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Optionally, the lithium cobalt oxide includes LiCoO₂. The lithium nickel oxide includes LiNiO₂. The lithium manganese oxide includes at least one of LiMnO₂ and LiMn₂O₄. The lithium nickel cobalt manganese oxide includes at least one of LiNi_{1/3}Co_{1/3}Mn_{1/3}O₂(NCM₃₃₃), LiNi_{0.5}Co_{0.2}Mn_{0.3}O₂(NCM₅₂₃), LiNi_{0.5}Co_{0.25}Mn_{0.25}O₂(NCM₂₁₁), LiNi_{0.6}Co_{0.2}Mn_{0.2}O₂(NCM₆₂₂), and LiNi_{0.8}Co_{0.1}Mn_{0.1}O₂(NCM₈₁₁). The lithium nickel cobalt aluminum oxide includes LiNi_{0.85}Co_{0.05}Al_{0.05}O₂. Examples of the lithium-containing phosphate with an olivine structure may include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. Optionally, the lithium iron phosphate includes LiFePO₄ (LFP). The lithium manganese phosphate includes LiMnPO₄. The weight ratio of the positive electrode active material in the positive electrode film layer is 80-100 wt%, based on the total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. The weight ratio of the binder in the positive electrode film layer is 0-20 wt%, based on the total weight of the positive electrode film layer.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber. The weight ratio of the conductive agent in the positive electrode film layer is 0-20 wt%, based on the total weight of the positive electrode film layer.

In some embodiments, the positive electrode plate may be prepared in the following manner: dispersing the components described above for preparing the positive electrode plate, for example, the positive electrode active material, the conductive agent, the binder, and any other components, in a solvent to form a positive electrode slurry. Optionally, the solvent includes N-methylpyrrolidone. The solid content of the positive electrode slurry is 40-80 wt%, the viscosity at room temperature is adjusted to 5000-25000 mPa·s, and the positive electrode slurry is applied onto the surface of the positive electrode current collector, dried, and then subjected to cold pressing through a cold rolling mill to form the positive electrode plate. The unit surface density of the positive electrode powder coating is 150-350 mg/m², and the compaction density of the positive electrode plate is 3.0-3.6 g/cm³, optionally 3.4-3.6 g/cm³. The calculation formula of the compaction density is as follows: compaction density = coating surface density/(electrode plate thickness after extrusion - current collector thickness).

It can be understood that in the embodiments of the present application, the positive electrode plate may be prepared by using the above positive electrode plate as the main body of the positive electrode plate, and forming a solid electrolyte interface film on the surface of the main body of the positive electrode plate.

### Negative Electrode Plate

A negative electrode plate includes a negative electrode current collector and a negative electrode film layer disposed on at least one surface of the negative electrode current collector, and the negative electrode film layer includes a negative electrode active material.

As an example, the negative electrode current collector is provided with two surfaces opposite to each other in a thickness direction thereof, and the negative electrode film layer is disposed on either or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material on a polymer material substrate. Optionally, the metal material includes at least one of copper, a copper alloy, nickel, a nickel alloy, titanium, a titanium alloy, silver, and a silver alloy. The polymer material includes at least one of polypropylene (PP), polyethylene terephthalate (PET), polybutylene terephthalate (PBT), polystyrene (PS), and polyethylene (PE).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more. The weight ratio of the negative electrode active material in the negative electrode film layer is 70-100 wt%, based on the total weight of the negative electrode film layer.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. The weight ratio of the conductive agent in the negative electrode film layer is 0-20 wt%, based on the total weight of the negative electrode film layer.

In some embodiments, the negative electrode film layer further optionally includes other auxiliary agents, for example, a thickener. The weight ratio of the other auxiliary agents in the negative electrode film layer is 0-15 wt%, based on the total weight of the negative electrode film layer. Optionally, the thickener includes sodium carboxymethylcellulose (CMC-Na).

In some embodiments, the negative electrode plate may be prepared in the following manner: dispersing the components described above for preparing the negative electrode plate, for example, the negative electrode active material, the conductive agent, the binder, and any other components, in a solvent to form a negative electrode slurry. Optionally, the solvent includes deionized water. The solid content of the negative electrode slurry is 30-70 wt%, and the viscosity at room temperature is adjusted to 2000-10000 mPa·s. The obtained negative electrode slurry is applied onto the negative electrode current collector, and subjected to a drying process and cold pressing (for example, using double rollers) to obtain the negative electrode plate. The unit surface density of the negative electrode powder coating is 75-220 mg/m², and the compaction density of the negative electrode plate is 1.2-2.0 g/cm³.

It can be understood that in the embodiments of the present application, the negative electrode plate may be prepared by using the above negative electrode plate as the main body of the negative electrode plate, and forming a solid electrolyte interface film on the surface of the main body of the negative electrode plate.

### Electrolyte

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, an electrolytic solution may be used as the electrolyte. The electrolytic solution includes an electrolyte salt and a solvent.

In some embodiments, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP). The concentration of the electrolyte salt is usually 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. The additive may include a negative electrode film-forming additive and a positive electrode film-forming additive, and may further include an additive capable of improving certain properties of the battery, for example, an additive for improving the overcharge performance of the battery, and an additive for improving the high- or low-temperature performance of the battery.

### Separator

In some embodiments, the secondary battery further includes a separator. The present application does not particularly limit the type of the separator, and any porous-structure separator known to have good chemical stability and mechanical stability may be selected and used.

In some embodiments, the material of the separator may be selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

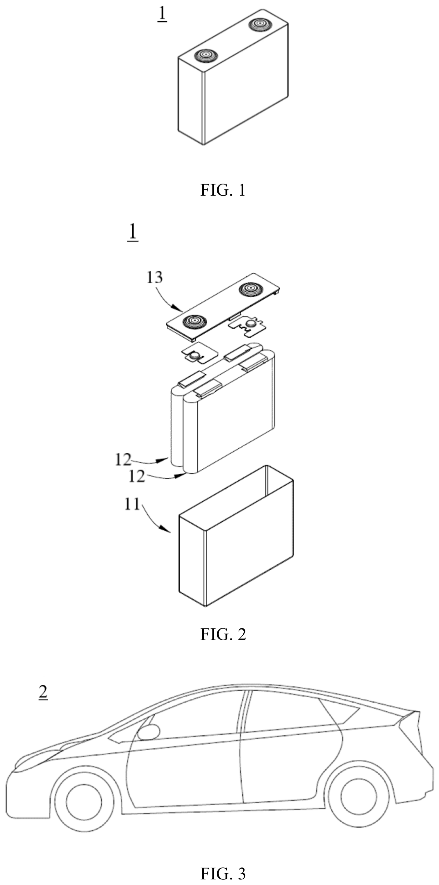

In some embodiments, the outer packaging of the secondary battery may be a hard shell, for example, a hard plastic shell, an aluminum shell, or a steel shell. The outer packaging of the secondary battery may also be a soft pack, for example, a pouch-type soft pack. The soft pack may be made of plastic, and examples of the plastic may include polypropylene, polybutylene terephthalate, polybutylene succinate, and the like. The present application does not particularly limit the shape of the secondary battery, and it may have a cylindrical shape, a square shape, or any other shape. For example, FIG. 1 shows a secondary battery 1 having a square structure as one example.

In some embodiments, referring to FIG. 2, the outer packaging may include a housing 11 and a top cover assembly 13. The housing 11 may include a bottom plate and a side plate connected to the bottom plate, and the bottom plate and the side plate define, in an enclosing manner, an accommodating cavity. The housing 11 is provided with an opening communicating with the accommodating cavity, and the top cover assembly 13 is capable of lidding the opening to close the accommodating cavity. The positive electrode plate, the negative electrode plate, and the separator may be subjected to a winding process or a stacking process to form an electrode assembly 12. The electrode assembly 12 is packaged in the accommodating cavity. The electrolytic solution is infiltrated into the electrode assembly 12. The number of the electrode assembly 12 included in the secondary battery 2 may be one or more, and those skilled in the art can select the number according to specific and actual needs.

In addition, the present application further provides an electric device. The electric device includes the secondary battery according to the present application. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery may be selected based on its use requirements.

FIG. 3 shows an electric device 2 as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

### Examples

In order to make the technical problems, the technical solutions, and the beneficial effects of the present application more apparent, the present application is further described in detail below with reference to the embodiments and drawings. Apparently, the described embodiments are merely some embodiments of the present application, rather than all of the embodiments. The following description of at least one exemplary embodiment is merely illustrative and is in no way intended to limit the present application and the applications thereof. Based on the embodiments in the present application, all other embodiments obtained by those of ordinary skills in the art without creative work shall fall within the protection scope of the present application.

The examples without techniques or conditions specified therein are implemented according to techniques or conditions described in the literature in the art or according to product instructions. Reagents or instruments used herein without specified manufacturers are all commercially available conventional products.

### Example 1

### (1) Preparation of positive electrode plate

① A bottom coating slurry was stirred uniformly. The bottom coating slurry includes a conductive agent, a binder, and deionized water. The bottom coating slurry was applied onto an aluminum foil of a positive electrode current collector and dried to form a bottom coating on the positive electrode current collector. The selection of the conductive agent in the bottom coating and the mass percentage of the conductive agent in the bottom coating are shown in Table 1.
② A positive electrode slurry was applied onto the bottom coating. The positive electrode slurry includes a LiCo_{0.1}Ni_{0.8}Mn_{0.1}O₂ positive electrode active material, a first liquid absorption material, a PVDF binder, conductive carbon black, and an N-methylpyrrolidone solvent. The positive electrode slurry was applied onto the bottom coating and dried to form a positive electrode active layer on the bottom coating. The selection of the first liquid absorption material in the positive electrode active layer and the mass percentage of the first liquid absorption material in the positive electrode active layer are shown in Table 1.

### (2) Preparation of negative electrode plate

A negative electrode slurry was applied onto a copper foil of a negative electrode current collector. The negative electrode slurry includes a silicon-based negative electrode active material, an SBR binder, conductive carbon black, and deionized water. The negative electrode slurry was applied onto the negative electrode current collector and dried to form a negative electrode active layer on the negative electrode current collector.

### (3) Preparation of battery

The positive electrode plate, the negative electrode plate, and the separator were assembled into a battery cell, the battery cell was installed into a housing, and an electrolytic solution was injected into the housing. The separator is a PE film. In the electrolytic solution, the lithium salt is 1 M LiPF₆, the solvent is a mixed solvent of EC and EMC, and the volume ratio of EC to EMC is 1:1.

### Examples 2-10

Examples 2-10 differ from Example 1 in the type of the conductive agent, and/or the electronic conductivity of the conductive agent, and/or the mass percentage of the conductive agent in the bottom coating, and/or the type of the second liquid absorption material, and/or the liquid absorption rate of the second liquid absorption material, and/or the mass percentage of the second liquid absorption material, and/or the dispersion density of the second liquid absorption material, and/or the type of the first material, and/or the liquid absorption rate of the first liquid absorption material, and/or the mass percentage of the first liquid absorption material, and/or the dispersion density of the first liquid absorption material.

### Comparative Example 1

Comparative Example 1 differs from Example 1 in that the positive electrode plate was prepared as follows:
A positive electrode slurry was applied onto the bottom coating. The positive electrode slurry includes a LiCo_{0.1}Ni_{0.8}Mn_{0.1}O₂ positive electrode active material, a PVDF binder, conductive carbon black, and an N-methylpyrrolidone solvent. The positive electrode slurry was applied onto the bottom coating and dried to form a positive electrode active layer on the bottom coating.

### Comparative Example 2

Comparative Example 2 differs from Example 1 in that the positive electrode plate was prepared as follows:
① A bottom coating slurry was stirred uniformly. The bottom coating slurry includes a conductive agent, a binder, and deionized water. The bottom coating slurry was applied onto an aluminum foil of a positive electrode current collector and dried to form a bottom coating on the positive electrode current collector. The selection of the conductive agent in the bottom coating and the mass percentage of the conductive agent in the bottom coating are shown in Table 1.
② A positive electrode slurry was applied onto the bottom coating. The positive electrode slurry includes a LiCo_{0.1}Ni_{0.8}Mn_{0.1}O₂ positive electrode active material, a PVDF binder, conductive carbon black, and an N-methylpyrrolidone solvent. The positive electrode slurry was applied onto the bottom coating and dried to form a positive electrode active layer on the bottom coating.

### Comparative Example 3

Comparative Example 3 differs from Example 1 in that the positive electrode plate was prepared as follows:
A positive electrode slurry was applied onto the bottom coating. The positive electrode slurry includes a LiCo_{0.1}Ni_{0.8}Mn_{0.1}O₂ positive electrode active material, a first liquid absorption material, a PVDF binder, conductive carbon black, and an N-methylpyrrolidone solvent. The positive electrode slurry was applied onto the bottom coating and dried to form a positive electrode active layer on the bottom coating. The selection of the first liquid absorption material in the positive electrode active layer and the mass percentage of the first liquid absorption material in the positive electrode active layer are shown in Table 1.

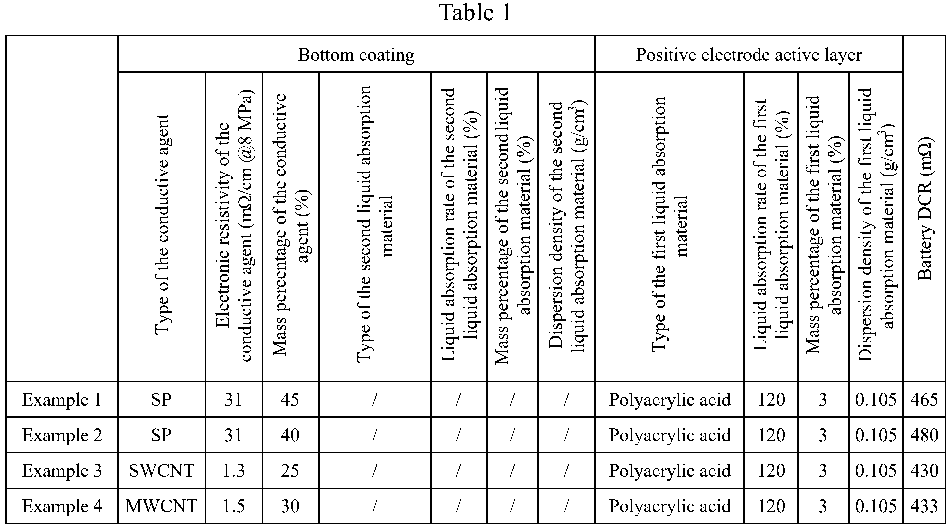

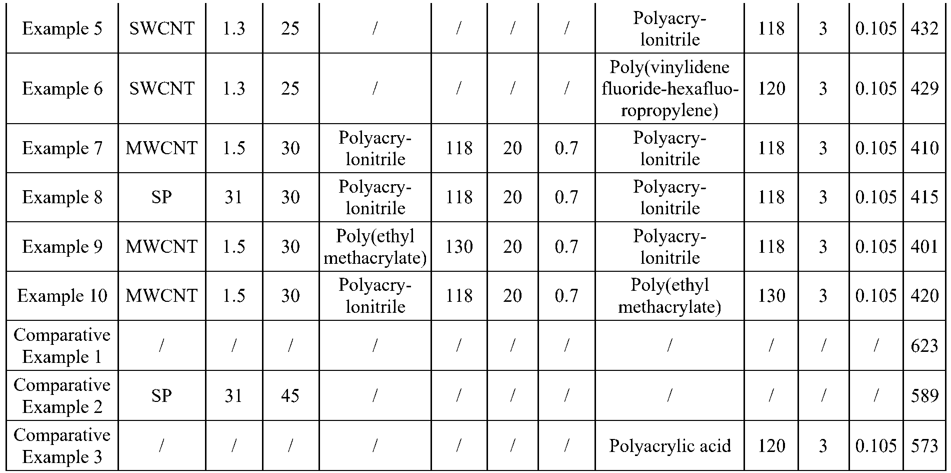

### Example 11

### (1) Preparation of positive electrode plate

A positive electrode slurry was applied onto an aluminum foil of a positive electrode current collector. The positive electrode slurry includes a positive electrode active material, a PVDF binder, conductive carbon black, and an N-methylpyrrolidone solvent. The positive electrode slurry was applied onto the positive electrode current collector and dried to form a positive electrode active layer on the positive electrode current collector. The positive electrode active material is the same as the positive electrode active material in Example 1.

### (2) Preparation of negative electrode plate

① A bottom coating slurry was stirred uniformly. The bottom coating slurry includes a conductive agent, an SBR binder, and deionized water. The bottom coating slurry was applied onto a copper foil of a negative electrode current collector and dried to form a bottom coating on the negative electrode current collector. The selection of the conductive agent in the bottom coating and the mass percentage of the conductive agent in the bottom coating are the same as those in Example 1, and the details are shown in Table 2.
② A negative electrode slurry was applied onto the bottom coating. The negative electrode slurry includes a negative electrode active material, a first liquid absorption material, an SBR binder, conductive carbon black, and deionized water. The negative electrode slurry was applied onto the bottom coating and dried to form a negative electrode active layer on the bottom coating. The selection of the first liquid absorption material in the negative electrode active layer and the mass percentage of the first liquid absorption material in the negative electrode active layer are the same as those in Example 1, and the details are shown in Table 2. The negative electrode active material is the same as the negative electrode active material in Example 1.

### (3) Preparation of battery

The positive electrode plate, the negative electrode plate, and the separator were assembled into a battery cell, the battery cell was installed into a housing, and an electrolytic solution was injected into the housing. The separator is a PP film. In the electrolytic solution, the lithium salt is 1 M LiPF₆, the solvent is a mixed solvent of EC and EMC, and the volume ratio of EC to EMC is 1:1.

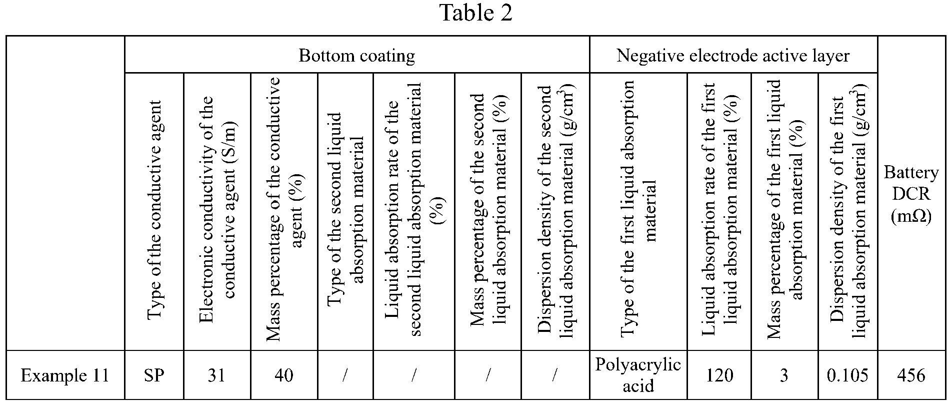

### Example 12

### (1) Preparation of positive electrode plate

The preparation of the positive electrode plate was the same as that in Example 1, as shown in Table 3.

### (2) Preparation of negative electrode plate

The preparation of the negative electrode plate was the same as that in Example 11, as shown in Table 3.

### (3) Preparation of battery

The positive electrode plate, the negative electrode plate, and the separator were assembled into a battery cell, the battery cell was installed into a housing, and an electrolytic solution was injected into the housing. The separator is a PP film. In the electrolytic solution, the lithium salt is 1 M LiPF₆, the solvent is a mixed solvent of EC and EMC, and the volume ratio of EC to EMC is 1:1.

**Table 3**

| | Battery DCR (mΩ) |
|---|---|
| Example 12 | 444 |

### Example 13

Example 13 differs from Example 1 in that a first active sublayer slurry and a second active sublayer slurry were prepared during the preparation of the positive electrode plate. The positive electrode plate obtained through coating includes a positive electrode current collector. The bottom coating is positioned on the positive electrode current collector, a first active sublayer is positioned on the bottom coating, and a second active sublayer is positioned on the first active sublayer. The mass percentage of the first liquid absorption material in the first active sublayer is greater than the mass percentage of the first liquid absorption material in the second active sublayer. The details are shown in Table 4.

### Example 14

Example 14 differs from Example 1 in that a first active sublayer slurry, a second active sublayer slurry, and a third active sublayer slurry were prepared during the preparation of the positive electrode plate. The positive electrode plate obtained through coating includes a positive electrode current collector. The bottom coating is positioned on the positive electrode current collector, a first active sublayer is positioned on the bottom coating, a second active sublayer is positioned on the first active sublayer, and a third active sublayer is positioned on the second active sublayer. The mass percentage of the first liquid absorption material in the first active sublayer is greater than the mass percentage of the first liquid absorption material in the second active sublayer. The mass percentage of the first liquid absorption material in the second active sublayer is greater than the mass percentage of the first liquid absorption material in the third active sublayer. The details are shown in Table 4.

**Table 4**

| | Mass percentage of the first liquid absorption material in the first active sublayer (%) | Mass percentage of the first liquid absorption material in the second active sublayer (%) | Mass percentage of the first liquid absorption material in the third active sublayer (%) | Battery DCR (mΩ) |
|---|---|---|---|---|
| Example 13 | 5 | 2.5 | / | 450 |
| Example 14 | 5 | 2.5 | 1 | 442 |

It can be understood that in Tables 1 and 2, SP represents carbon black, SWCNT represents single-walled carbon nanotube, and MWCNT represents multi-walled carbon nanotube.

As can be seen from Tables 1-4, in the electrode plate, the battery obtained by stacking the bottom coating with the active layer, introducing the conductive agent into the bottom coating, and introducing the first liquid absorption material into the active layer has a low direct-current internal resistance, thereby enabling the battery to exhibit a high rate capability. When the active layer of the electrode plate includes a plurality of active sublayers, the battery has a low direct-current internal resistance, thereby enabling the battery to exhibit a high rate capability.

The technical features of the examples described above may be combined in any manner. For brevity, not all possible combinations of the technical features in the above examples are described. However, as long as there is no contradiction in the combinations of these technical features, they should be considered to be within the scope of the specification.

The examples described above only illustrate some embodiments of the present application, and the description thereof is specific and detailed, but should not be construed as limiting the patent scope of the present disclosure. It should be noted that various changes and modifications can be made by those of ordinary skill in the art without departing from the spirit of the present application, and shall fall within the protection scope of the present application. Therefore, the protection scope of the present patent application shall be subjected to the appended claims.

## Claims

1. An electrode plate, comprising a current collector, a bottom coating, and an active layer, wherein the bottom coating is positioned between the current collector and the active layer; and the bottom coating comprises a conductive agent, and the active layer comprises active materials and a first liquid absorption material, wherein a liquid absorption rate of the first liquid absorption material is ≥ 110%; and
optionally, the liquid absorption rate of the first liquid absorption material is ≥ 120%.

2. The electrode plate according to claim 1, wherein the conductive agent satisfies at least one of the following features (1)-(3):
(1) a resistivity of the conductive agent being ≤ 60 mΩ/cm;
(2) a mass percentage of the conductive agent in the bottom coating being 15%-45%; and
(3) the conductive agent comprising at least one of superconducting carbon, acetylene black, carbon black, Ketjen black, a carbon dot, a carbon nanotube, graphene, and a carbon nanofiber.

3. The electrode plate according to claim 1 or 2, wherein the bottom coating further comprises a second liquid absorption material, wherein a liquid absorption rate of the second liquid absorption material is ≥ the liquid absorption rate of the first liquid absorption material; and
optionally, the liquid absorption rate of the second liquid absorption material is ≥ 110%, and further optionally, the liquid absorption rate of the second liquid absorption material is ≥ 120%.

4. The electrode plate according to claim 3, wherein the second liquid absorption material satisfies at least one of the following features (1)-(4):
(1) a dispersion density of the second liquid absorption material in the bottom coating being greater than a dispersion density of the first liquid absorption material in the active layer;
(2) the dispersion density of the second liquid absorption material in the bottom coating being 0.3 g/cm³-1 g/cm³;
(3) a mass percentage of the second liquid absorption material in the bottom coating being 10%-30%; and
(4) the second liquid absorption material comprising at least one of a polyacrylic acid-based electrolyte, a polyacrylonitrile-based electrolyte, a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte; and
optionally, the second liquid absorption material comprising one or more of poly(ethyl methacrylate), poly(ethyl acrylate), poly(*n*-butyl methacrylate), poly(butyl acrylate), poly(*n-*octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

5. The electrode plate according to any one of claims 1-4, wherein the first liquid absorption material satisfies at least one of the following features (1)-(3):
(1) the dispersion density of the first liquid absorption material in the active layer being 0.1 g/cm³-0.5 g/cm³;
(2) a mass percentage of the first liquid absorption material in the active layer being 0.5%-30%; and
optionally, the mass percentage of the first liquid absorption material in the active layer being 0.5%-10%; and
(3) the first liquid absorption material comprising at least one of a polyacrylate-based electrolyte, a polyether-based electrolyte, a polycarbonate-based electrolyte, a polycarboxylate-based electrolyte, a polyolefin-based electrolyte, a silicon-based electrolyte, a polythiol-based electrolyte, a maleic anhydride-based electrolyte, and a polysulfate-based electrolyte; and
optionally, the first liquid absorption material comprising one or more of a polyacrylic acid-based electrolyte, a polyacrylonitrile-based electrolyte, poly(ethyl methacrylate), poly(ethyl acrylate), poly(*n*-butyl methacrylate), poly(butyl acrylate), poly(*n*-octyl methacrylate), poly(*n*-octyl acrylate), poly(vinyl acetate), poly(vinylene carbonate) and poly(vinyl ethylene carbonate), poly(hydroxyethyl acrylate), poly(hydroxypropyl methacrylate), poly(trifluoroethyl methacrylate), poly(glycidyl methacrylate), poly(vinylidene fluoride-hexafluoropropylene), γ-methacryloxypropyltrimethoxysilane, γ-methacryloxypropyltriisopropylmethoxysilane, γ-methacryloxymethyldimethoxysilane, vinyltriethoxysilane, vinyltrimethoxysilane, and vinyl tris(β-methoxyethoxy)silane.

6. The electrode plate according to any one of claims 1-5, wherein in the active layer, in a direction away from the bottom coating, the dispersion density of the first liquid absorption material gradually decreases.

7. The electrode plate according to any one of claims 1-5, wherein with 1/2 of the active layer's thickness as a boundary, the dispersion density of the first liquid absorption material on a side proximal to the bottom coating is higher than the dispersion density of the first liquid absorption material on a side distal to the bottom coating.

8. The electrode plate according to any one of claims 1-5, wherein the active layer comprises a plurality of stacked active sublayers, wherein each active sublayer comprises the active materials and the first liquid absorption material, the first liquid absorption material in each active sublayer is uniformly distributed, and in a direction away from the bottom coating, the mass percentage of the first liquid absorption material in adjacent active sublayers gradually decreases; and
optionally, in the direction away from the bottom coating, the mass percentage of the first liquid absorption material in adjacent active sublayers decreases by 0.5%-3%.

9. The electrode plate according to claim 8, wherein the active sublayer comprises at least 2 layers, and in the direction away from the bottom coating, mass percentages of the first liquid absorption material in the 2 active sublayers are 1%-5% and ≤ 4.5%, respectively.

10. The electrode plate according to claim 8, wherein the active sublayer comprises at least 3 layers, and in the direction away from the bottom coating, mass percentages of the first liquid absorption material in the 3 active sublayers are 1%-5%, 0.5%-4.5%, and ≤ 4%, respectively.

11. A battery, comprising the electrode plate according to any one of claims 1-10.

12. The battery according to claim 11, wherein an electrolyte of the battery partially infiltrates into the active layer and/or the bottom coating of the electrode plate; and
optionally, the electrolyte comprises a free electrolytic solution and/or a gel electrolyte.

13. An electric device, comprising the battery according to claim 11 or 12.
